# EUROPEAN PATENT APPLICATION

(11) **EP 1 262 981 A2**
(43) Date of publication of application: **04.12.2002**
(21) Application number: 02011931.9
(22) Date of filing: 29.05.2002
(51) Int. Cl.: G11B 27/10, G11B 27/11, G11B 27/32, G11B 19/12

(54) **Information recording/reproducing apparatus**

(30) Priority: 29.05.2001 JP 2001160158
(71) Applicant: Pioneer Corporation, Meguro-ku, Tokyo (JP)
(72) Inventor: Fujita, Michio, Tokorozawa Koujou, Pioneer Corp., Tokorozawa-shi, Saitama-ken 359-8522 (JP); Kadoshima, Tetsuo, Tokorozawa Koujou,Pioneer Corp., Tokorozawa-shi, Saitama-ken 359-8522 (JP)
(74) Representative: Sajda, Wolf E., Dipl.-Phys.

(57) **Abstract**

An information recording/reproducing apparatus is provided with an editing function which allows a reproduction order of information recorded in an information recording/reproducing medium(2) to be changed in a more convenient fashion or arranged. When a user selects music information recorded in the information recording/reproducing medium during the reproduction by operating an operating unit(19), data of track number indicating a place where the reproduced information is recorded is stored in a storing unit(20). When the selection of information is completed by the user, the data of track number stored in the storing unit is changed in turn of a predetermined track number, and also an updated data assigned a group file is generated. The updated data is recorded in a predetermined area of the information recording/reproducing medium as a management data showing the reproduction order.

## Description

### BACKGROUND OF THE INVENTION

### Field of the Invention

The present invention relates to an information recording/reproducing apparatus having a function for changing or arranging reproduction order of information recorded on an information recording/reproducing medium such as an MD (Mini Disc).

The present application claims priority from Japanese Patent Application No.2001-160158, the disclosure of which is incorporated herein by reference for all purposes.

### Description of the Related Art

In recent years, as well as an information recording/reproducing medium such as an MD having a large capacity has been developed, data compression recording technologies with the compression of higher densities has been developed, and as a result of them, much information such as many pieces of music data can be recorded in one information recording/reproducing medium today.

In such a developed medium, a user's desired information is usually interspersed among much information recorded in the information recording/reproducing medium. Therefore, it usually takes much time to reach the user's desired information when much information is reproduced in turn by the information recording/reproducing apparatus, or it is impossible to selectively reproduce the only information desired by the user therein.

As a device for resolving such an inconvenience, the information recording/reproducing apparatus provided with a function of changing and registering each reproduction order of much information recorded in the reproducing medium such as MD is well known.

Assuming that the user wishes to reproduce the second, fifth, and seventh music among, for example, ten pieces of music recorded on the information recording/reproducing medium giving his/her preference, the registering function will cause the following effect. That is, the reproduction order of the second, fifth, and seventh music is changed to the first, second, and third, respectively, and the remaining pieces of music is set in the sequential reproduction order, i.e. , at or after the fourth in turn.

In such a way, after changing the reproduction order of music, the music is reproduced in the newly set order, so that the music desired by the user can be reproduced prior to the other pieces of music.

However, even if the above mentioned registering function provided in the conventional information recording/reproducing apparatus is employed, the reproduction order only of much information can be changed, but the so-called editing of the recorded information such as arranging the desired information according to the user's preference can not be performed.

Concretely describing, even if the user changes the reproduction order of the desired music information by employing the conventional registering function, assuming the desired music information to be plurality, it can not be determined which piece of music is the desired music information at once. Thus, there was any problem that the reproduction of the desired music information only can not be performed in the convention apparatus with the registering function.

### SUMMARY OF THE INVENTION

The present invention has been achieved in view of the foregoing conventional problems. It is thus an object of the present invention to provide an information recording/reproducing apparatus including an editing function which allows order of information recorded on an information recording/reproducing medium to be changed or arranged in more useful fashion for a user.

To achieve the foregoing object, the present invention provides an information recording/reproducing apparatus having a function for changing a reproduction order of information recorded on an information recording/reproducing medium, comprising a reproducing unit for reproducing the information recorded on an information recording/reproducing medium, a selector for selecting the information reproduced by the reproducing unit, a storage for storing data indicating the reproduction order of the information selected by the selector, an editor for updating the data indicating the reproduction order stored in the storage into data indicating a predetermined order, and for assigning a group file to the updated data, and a recording unit for recording the updated data assigned the group file generated by the editor into a predetermined data management area of the information recording/reproducing medium.

According to the information recording/reproducing apparatus having such a structure, not only the reproduction order of information such as music is changed, but also the music information selected by the user is arranged with an attachment of the group file, so that the desired information can be edited under an easy management thereof. Thus, the user can be given an excellent convenience in the information reproduction.

Another aspect of the present invention is to provide an information recording/reproducing method including a function for changing a reproduction order of information recorded on an information recording/reproducing medium, the method comprising steps of reproducing the information recorded on the information recording/reproducing medium, selecting the reproduced information, storing data indicating the reproduction order of the selected information, updating the data indicating the stored reproduction order into data indicating a predetermined order, assigning a group file to the updated data, and recording the updated data assigned the group file into a predetermined data management area of the information recording/reproducing medium.

### BRIEF DESCRIPTION OF THE DRAWINGS

These and other objects and advantages of the present invention will become clear from the following description with reference to the accompanying drawings, wherein:
Fig. 1 is a block diagram showing the structure of an information recording/reproducing apparatus according to an embodiment of the present invention;
Fig. 2 is a flowchart for explaining the operation of the information recording/reproducing apparatus of the present embodiment;
Figs. 3(a) and 3(b) are diagrams for showing UTOC data recorded in a data management area of a magneto-optical disc and data recorded in a program area thereof, respectively;
Figs. 4(a) and 4(b) are diagrams for explaining an old UTOC data and an updated new UTOC data, respectively; and
Figs. 5(a) and 5(b) are diagrams for showing a file structure of the updated UTOC data of the present invention, and of a prior art, respectively.

### DETAILED DESCRIPTION OF THE PREFERRED EMBODIMENTS

Now, an embodiment of the present invention will be described below with reference to the drawings. Here, the information recording/reproducing apparatus which uses a recordable MD(Mini Disc) for data recording and reproduction will be described as the present preferable embodiment.

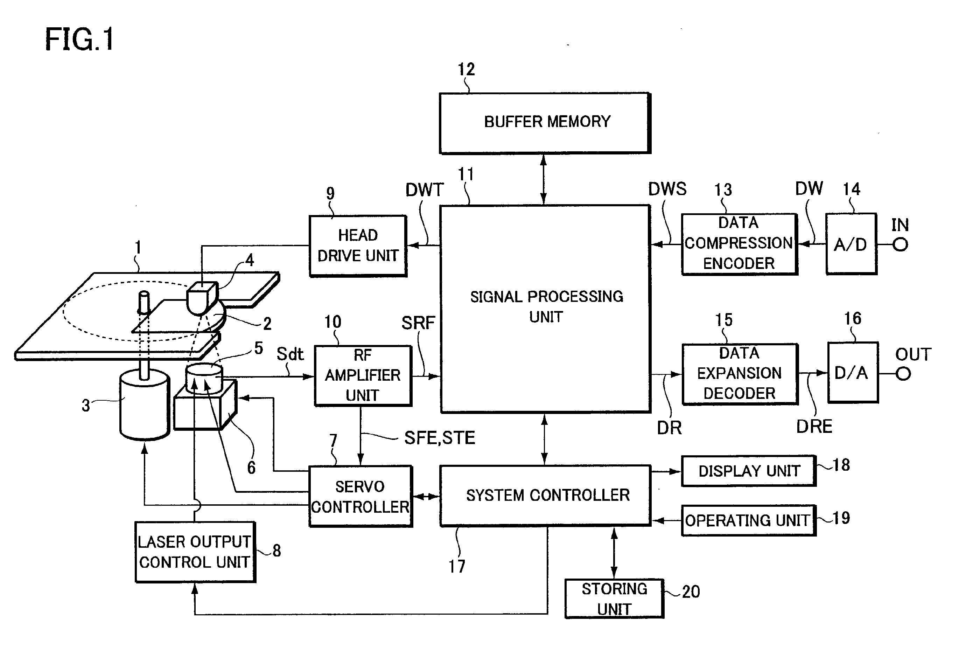

Fig. 1 is a block diagram showing the structure of the information recording/reproducing apparatus of the present embodiment. In the diagram, the information recording/reproducing apparatus has a spindle motor 3 , a magnetic head 4, an optical pickup 5 provided with a semiconductor laser(not shown), and a carriage 6 for mounting the magnetic head 4 and the optical pickup 5 on to carry them.

When the recordable MD is loaded in a so-called clamp position, the spindle motor 3 rotates a magneto-optical disc 2 contained in a MD cartridge 1 at a predetermined linear velocity according to the instruction from a system controller 17 to be described later. The magnetic head 4 and the optical pickup 5, the both being opposed to a recording surface of the magneto-optical disc 2, write data onto the recording surface or read data recorded on the recording surface.

More specifically, in data write, the optical pickup 5 irradiates the recording surface of the magneto-optical disc 2 with a laser beam, while the magnetic head 4 applies a recording magnetic field thereto. Data write is thus effected by magneto-optical recording. In data read, the optical pickup 5 irradiates the recording surface of the magneto-optical disc 2 with a laser beam(not shown) from its semiconductor laser. Optical elements (not shown) arranged in the optical pickup 5, such as an analyzer and a photoreceptor, detect the direction of polarization of the beam reflected from the recording surface, and output a detection signal Sdt thereof.

In both data write and data read, the carriage 6 shifts to move the magnetic head 4 and the optical pickup 5 along a radial direction of the magneto-optical disc 2, thereby allowing random access to the recording surface.

The present information recording/reproducing apparatus also has a servo controller 7, a laser output control unit 8, a head drive unit 9, an RF amplifier unit 10, a signal processing unit 11, a buffer memory 12, a data compression encoder 13, an A/D converter 14, a data expansion decoder 15, a D/A converter 16, and the system controller 17.

The servo controller 7 exercises synchronous servo control over the spindle motor 3 so that the magneto-optical disc 2 is maintained at a constant linear velocity. The servo controller 7 also controls the movement of the carriage 6. In addition, the servo controller 7 exercises focus servo control and tracking servo control over actuators (not shown) to fine-adjust the position of the optical pickup 5. The optical pickup 5 is thereby adjusted in position with respect to the recording surface of the magneto-optical disc 2 so that data write and data read can be effected appropriately.

The laser output control unit 8 controls an emission power of the semiconductor laser arranged in the optical pickup 5 so that the recording surface of the magneto-optical disc 2 is irradiated with laser beams of appropriate intensities during data write and data read.

In data write, the head drive unit 9 supplies writing data DWT to the magnetic head 4, thereby producing the recording magnetic field for magneto-optical recording.

The RF amplifier unit 10 generates error signals such as a focus error signal SFE and a tracking error signal STE from the detection signal Sdt output from the optical pickup 5. The RF amplifier unit 10 also generates an RF (Radio Frequency) signal SRF which contains data recorded on the recording surface of the magneto-optical disc 2. The error signals are supplied to the servo controller 7. The RF signal SRF is supplied to the signal processing unit 11.

In data read, the signal processing unit 11 subjects the supplied RF signal SRF to A/D conversion, followed by decoding conformable to a predetermined specification to generate demodulation data DR, which is supplied to the data expansion decoder 15. The data expansion decoder 15 expands the demodulation data DR which is compressed, thereby demodulating it to audio data DRE without any compression. Further, the D/A converter 16 converts the audio data DRE into an analog audio signal of audio frequency band to output it into an output terminal OUT.

Additionally, in data write, the signal processing unit 11 generates the writing data DWT through exercising the encoding process conformable to a predetermined specification to recording data DWS supplied from the data compression encoder 13. The writing data DWT is supplied to the magnetic head 4 through the head driving unit 9. More specifically, when the analog audio signal is supplied from an outside audio equipment to an input terminal IN, then the A/D converter 14 converts it into digital audio data DW. Next, the data compression encoder 13 generates the recording data DWS through exercising the compressing process to the audio data DW, and supplies it to the signal processing unit 11. Last, the signal processing unit 11 generates the writing data DWT from the recording data DWS, and supplies it to the magnetic head 4 through the head drive unit 9.

The buffer memory 12 is provided as a working area for adjusting timing in generating the demodulation data DR and the writing data DWT, where buffering of each data is temporarily exercised for adjusting the timing thereof at a stage of generating the demodulation data DR from the RF signal SRF, and also a stage of generating the writing data DWT from the recording data DWS by the signal processing unit 11.

The system controller 17 is provided with a micro processor unit(MPU) for executing a predetermined system program, thereby performing a centralized control for operation of the present information recording/reproducing apparatus.

The system controller 17 is also connected to a display unit 18 with a liquid crystal display or the like, an operating unit 19 with a plurality of operation keys(not shown), and a storing unit 20 which comprises semiconductor memory and forms a working area for temporarily storing various data.

The display unit 18 displays an inner condition of the present information recording/reproducing apparatus based on image data supplied from the system controller 17, and a menu information for guiding a user in the operation thereon. When the operation keys mounted on the operating unit 19 are operated, the system controller 17 controls the overall operation of the present information recording/reproducing apparatus based on instructions through the operation keys.

Incidentally, when the user operates a so-called register key, one of operation keys mounted on the operating unit 19, the system controller 17 executes the above-mentioned system program to change a reproduction order of information data recorded on the magneto-optical disc 2 such as a recordable MD. Further, the system controller 17 generates a management data giving the updated information regarding the reproduction order, which is recorded in a data management area of the magnet-optical disc 2.

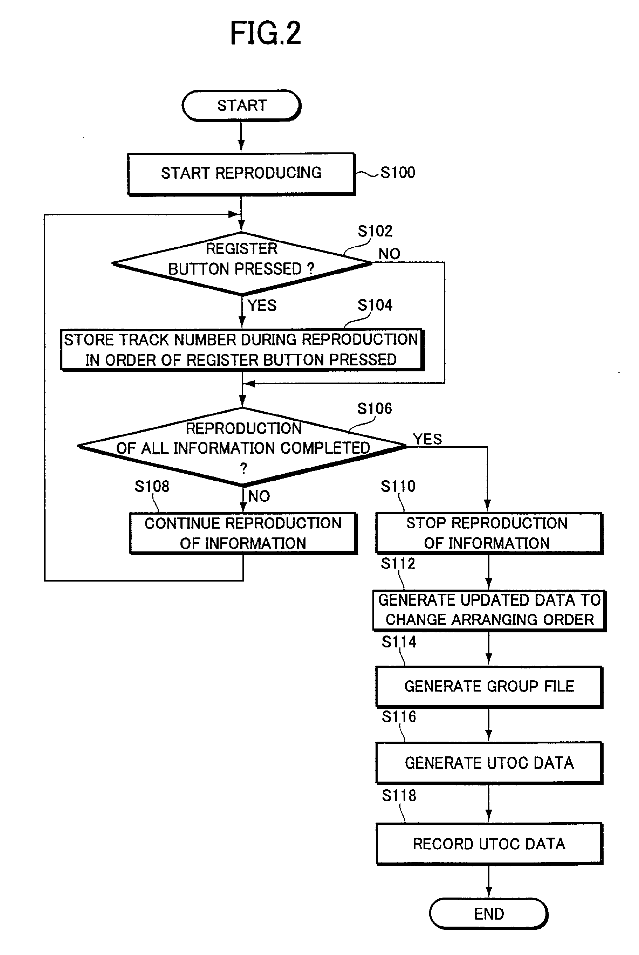

Now, the operation of the information recording/reproducing apparatus having such a structure will be described with reference to the flowchart shown in Fig. 2. Specifically, the operation for editing the information recorded on the information recording/reproducing medium will be explained, wherein the recorded data is changed or arranged regarding the reproduction order in a more convenient fashion for the user.

In Fig. 2, when the MD is loaded in the present information recording/reproducing apparatus and a start key for reproducing of the operation keys mounted on the operating unit 19 is pressed by the user, then at a step S100, the system controller 17 actuates the spindle motor 3 and the carriage 6 through instructing the servo controller 7. Further, through instructing the laser output control unit 8, the system controller 17 allows the optical pickup 5 to irradiate the recording surface of the magneto-optical disc 2 with the laser beam for reading information, and then to detect the direction of polarization of the beam reflected from the recording surface. Then, reading data therein starts, and further the information reproduction starts through the RF amplifier unit 10, signal processing unit 11, data expansion decoder 15, and D/A converter 16.

More specifically, when such information reproduction starts, firstly UTOC(User Table of Contents) data recorded in a read-in area as the data management area of the magneto-optical disc 2 is read and reproduced. Then, the signal processing unit 11 extracts management data such as a track number and play time per track, and supplies it to the system controller 17. After the system controller 17 stores the management data into the storing unit 20, the reproduction of music recorded in a program area of the magneto-optical disc 2 starts.

Next, at a step S102, it is determined as to whether the register button mounted on the operating unit 19 is pressed. In the case that the register button is pressed, the program proceeds to a step S104, where the track number data identifying information during the reproduction is stored in the storing unit 20. In the case that the register button is not pressed, the program does not execute the process of the step S104, but proceeds to the step S106.

Specifically, at the step S104, when the signal processing unit 11 executes the decoding process to generate the demodulation data DR, sub-code data is divided and extracted to be supplied into the system controller 17, track number data of which is obtained by the system controller 17 and then being stored in the storing unit 20.

At the step 106, it is determined as to whether the reproduction of all the information recorded in the disc 2 is completed. In the case that the reproduction is not completed, the continuation of the information reproduction is instructed at a step S108, where the processes after the step S102 are repeated.

In more detail, the system controller 17 compares the data of elapsed reproduction time contained in the sub-code data supplied from the signal processing unit 11 and the data of total recording time obtained from the data management area at the step 100. In the case that the elapsed reproduction time does not reach the total recording time, it is determined that the reproduction of all the information is not completed, and then the processes from the step S102 are repeated through the step S108. On the other hand, in the case that the elapsed reproduction time reaches the total recording time, it is determined that the reproduction of all the information is completed, and then the program proceeds to a step S110.

In such a way, the processes from the step S102 to the step S108 are repeated until the reproduction of all the information is completed. During the processes, when the user presses the register button once or a plurality of times, the data of track number of the information being reproduced when the register button is pressed is stored into the storing unit 20 in turn at the step S104. When it is determined that the reproduction of all the information is completed at the step S106, the program proceeds to the step S110 as mentioned above.

At the step S110, the information reproduction of the magneto-optical disc 2 including the data read of the disc is stopped, and then the program proceeds to a step S112.

At the step S112, the reproducing order of the information recorded in the disc 2 is changed based on the data of track number stored in the storing unit 20, wherein updated data indicating a new reproducing order is generated.

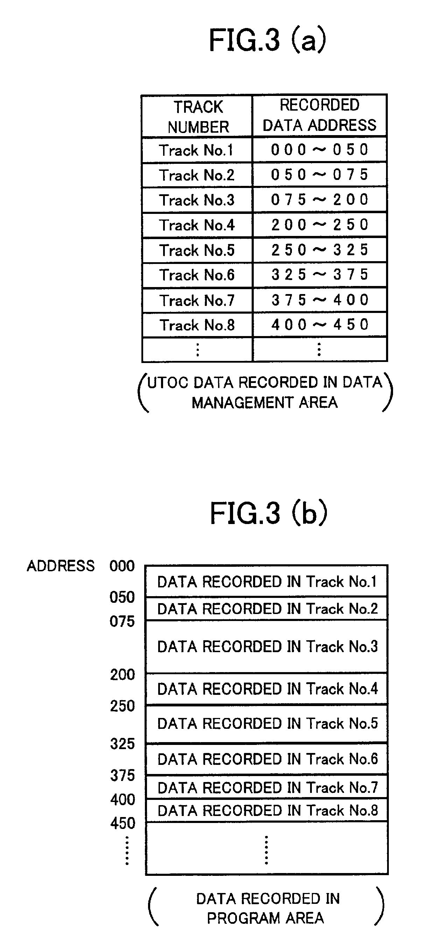

Specifically, the following processes are conducted at the step S112. Suppose firstly, as shown in Fig. 3(a), that a plurality of track numbers, [Track No. 1], [Track No. 2], [Track No. 3] ... and recorded data addresses indicating places having information such as music to be recorded corresponding to each track number are stored as the UTOC data in the read-in area as the data management area of the magneto-optical disc 2.

In the other words, as shown in Fig. 3(b), the program area of the disc 2 has data such as music information to be recorded with address. In addition, prerecorded as shown in Fig. 3(a) is UTOC data which corresponds the data address of each recorded data with the track number.

At the steps S102-S108, when the user presses the register button during the reproduction of the information such as music corresponding to each track number, for example, [Track No. 2], [Track No. 4], [Track No. 5], and [Track No. 7], the data corresponding to these track numbers, [Track No. 2], [Track No. 4], [Track No. 5], and [Track No. 7] are stored in turn to press the registration button in the storing unit 20.

The system controller 17 firstly obtains the data of the first track number([Track No. 2]in the present embodiment) stored in the storing unit 20. Then, it is determined whether there is any track number younger than the obtained first track number and also not designated by the register button. In this case, the objects to be changed regarding the track number is not the younger one than the obtained first track number, but the following ones therefrom as stored in the storing unit 20.

Specifically, suppose that the user does not press the register button during the reproduction of music in the Track No. 1, but firstly presses it during the reproduction of music in the Track No. 2. In this case, there exists one track number([Track No. 1]) younger than the first track number ([Track No.2]) as stored in the storing unit 20.

The present invention allows the younger track number([Track No. 1]) to remain as it is, and sets the first track number ([Track No. 2]) as stored in the storing unit 20 to be the track number following from the younger track number, the track numbers after the first track number being the objects to be changed.

Next, the system controller 17 obtains the data of all the remaining track numbers, [Track No. 4], [Track No. 5], and [Track No. 7] as stored in the storing unit 20, and then updates these track numbers to new track numbers under serial number following from the first track number([Track No. 2]), that is, to [Track No. 3], [Track No. 4], and [Track No. 5], respectively.

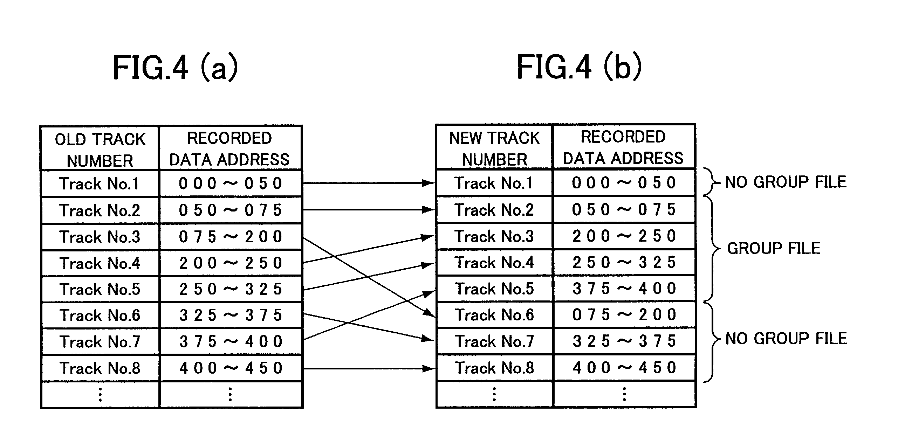

In such a way, after updating all the track numbers [Track No. 2], [Track No. 4], [Track No. 5], and [Track No. 7] to the new track numbers, [Track No. 2] - [Track No. 5], the remaining track numbers such as [Track No. 3], or [Track No. 6] not to be designated by the register button are updated to follow the last updated number, [Track No. 5] under the serial number with a turn of younger number, i.e., [Track No. 6], [Track No. 7] ... , as shown in Fig. 4(b).

Under such a process of changing the track number, the old track numbers stored in the data management area of the magneto-optical disc 2 as shown in Fig. 4(a) are updated to the new track numbers as shown in Fig. 4(b). After storing the updated data in the storing unit 20, the program proceeds to a step S114.

At the step S114, the track numbers designated by the register button are arranged with correspondence to a file called "group file" in order to sort out the track numbers designated by the register button as the same group.

Specifically, when the old track numbers, [Track No. 2], [Track No. 4], [Track No. 5], and [Track No. 7] as designated by the register button are updated to the new track numbers, [Track No. 2], [Track No. 3], [Track No. 4], and [Track No. 5], the updated track numbers is allowed to correspond with the group file as the same group. Thus, as shown in Fig. 4(b), the group file is assigned to the track numbers selected by the register button, and not assigned to the track numbers being not selected by the register button. As a result, the information such as music selected by the user can be arranged by the group file, so that the discrimination between the information selected by the user and non-selected one can be conducted by the group file.

After arranging the updated data by the group file, the program proceeds to a step S116.

At the step S116, a UTOC data for writing the updated data as shown in Fig. 4(b) into the data management area(read-in area) of the magneto-optical disc 2 is generated. That is, the system controller 17 generates the UTOC data through converting the updated data in conformity to a predetermined specification.

Next, at a step S118, the spindle motor 3, the optical pickup 5, the carriage 6 and the magnetic head 4 are firstly activated to set the present information recording/reproducing apparatus into a mode for writing data. Then, the generated UTOC data is supplied to the signal processing unit 11 to generate the writing data DWT. The writing data DWT is supplied to the magnetic head 4 through the head drive unit 9, thereby writing it into the data management area(read-in area) of the magneto-optical disc 2. After completing the writing process, the mode for writing data is cancelled to terminate all the processes.

Thus, when the updated data is written into the data management area of the magneto-optical disc 2 as the UTOC data, the data of the old track number and the recorded data address corresponding thereto as shown in Fig. 4(a) is replaced with the data of the new track number and the new recorded data address corresponding thereto as shown in Fig. 4(b). Then, when the user reproduces the recordable MD the UTOC data of which is rewritten, the reproduction is performed according to the order of the updated track number.

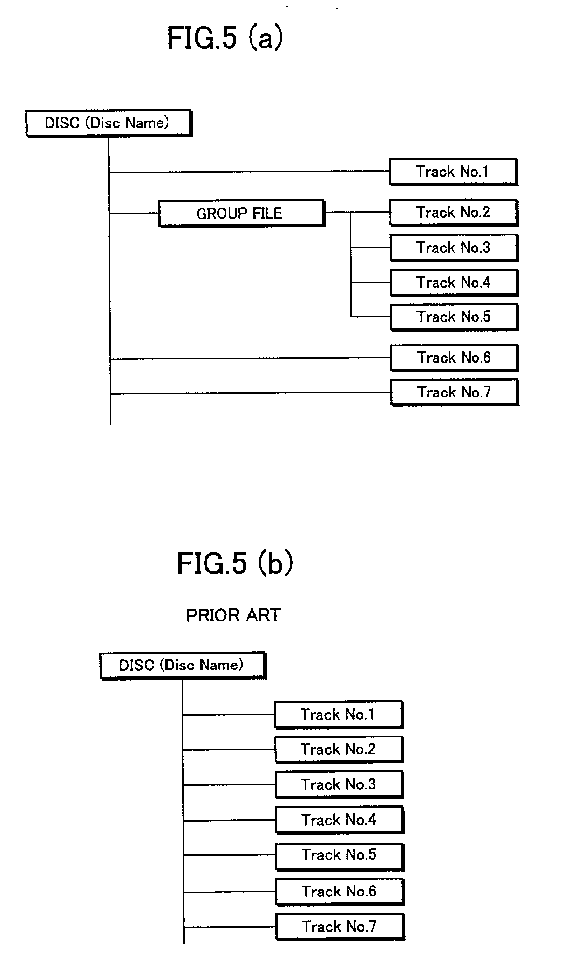

As shown in Fig. 5(a), the rewritten UTOC data indicates a file structure having the both groups of track numbers arranged with the group file and track numbers with no group file. Therefore, when the user designates the group file by operating a predetermined operation keys mounted on the operating unit 19 at the step of information reproduction, the track number included in the group file is displayed on the display unit 18. Then, the user designates a most desired track number of the displayed track numbers, so that the user's desired music can be selectively reproduced.

In such a way, the information recording/reproducing apparatus according to the present embodiment not only changes the reproduction order of the music information recorded in the information recording/reproducing medium, but also arranges the music information selected by the user with correspondence to the group file. Thus, the desired music information can be easily managed or edited by the user. Consequently, comparing with the conventional registering function as mentioned above, the superior convenience can be provided according to the present invention.

Incidentally, in the case that the change of the track number is performed using the conventional registering function, the track numbers to be changed also are positioned in the same class as the track numbers to be not changed as shown in Fig. 5(b), so that the discrimination between the information desired by the user and not desired one is difficult. However, in the case that the editing function provided in the present information recording/reproducing apparatus is employed, the desired information of track numbers are positioned in the different class from the non-registered track numbers in the file structure since they are included in the group file as shown in Fig. 5(a). Thus, the present invention can provide the user with the easier and more convenient data management with the discrimination.

In addition, the foregoing embodiment has dealt with the information recording/reproducing apparatus which uses a recordable MD. Nevertheless, the information recording/reproducing apparatus of the present invention may also use the other information recording/reproducing medium, for example, a write once type CD(compact disc) or a DVD(digital versatile disc) which can record information only once, a CD or DVD which can rewrite information many times, or a DAT(digital audio tape).

Further, a computer program for realizing the operation as explained referring to the flow chart of Fig. 2 may be prepared, and be installed in an outside electronic equipment such as a so-called personal computer having a micro processor unit. That is, through executing the computer program by the micro computer, the same editing process as the information recording/reproducing apparatus of the present embodiment can be performed.

As has been described above, according to the information recording/reproducing apparatus of the present invention, the reproduction order of the information recorded in the information recording/reproducing medium is changed based on the user's instructions, and also the updated data indicating the changed reproduction order is arranged with the group file. After the arrangement, the updated data with the group file is recorded on the information recording/reproducing medium, thereby allowing the user to retrieve or select the desired music information based on the group file when reproducing the music information. Thus, the present invention has a wonderful effect to provide the user with more convenient data management in the information recording/reproducing apparatus.

While there has been described what are at present considered to be preferred embodiments of the present invention, it will be understood that various modifications may be made thereto, and it is intended that the appended claims cover all such modifications as fall within the true spirit and scope of the invention.

## Claims

1. An information recording/reproducing apparatus having a function for changing a reproduction order of information recorded on an information recording/reproducing medium (2),
**characterized by**:
- a reproducing unit (5) for reproducing the information recorded on an information recording/reproducing medium (2);
- a selector (19) for selecting the information reproduced by the reproducing unit (5);
- a storage (20) for storing data indicating the reproduction order of the information selected by the selector (19);
- an editor (17) for updating the data indicating the reproduction order stored in the storage (20) into data indicating a predetermined order, and for assigning a group file to the updated data; and
- a recording unit (4, 5) for recording the updated data with attachment of the group file generated by the editor (17) into a predetermined data management area of the information recording/reproducing medium (2).

2. The apparatus according to claim 1,
wherein the selector is an operation key mounted on an operating unit (19).

3. The apparatus according to claim 1 or 2,
wherein the storage (20) stores the updated data.

4. The apparatus according to any of claims 1 to 3, further **characterized by**:
a system controller (17) provided with the editor,
wherein the system controller (17) changes the reproduction order of the information recorded on the medium (2), and classifies the updated data by the group file.

5. The apparatus according to any of claims 1 to 4,
wherein the updated data are UTOC data to be recorded in a read-in area of the information recording/reproducing medium (2).

6. An information recording/reproducing method including a function for changing a reproduction order of information recorded in an information recording/reproducing medium (2),
the method comprising the following steps:
- reproducing (S100) the information recorded in the information recording/reproducing medium (2);
- selecting (S102) the reproduced information;
- storing (S104) data indicating the reproduction order of the selected information;
- updating (S112) the data indicating the stored reproduction order into data indicating a predetermined order;
- assigning (S114) a group file to the updated data; and
- recording (S118) the updated data with attachment of the group file into a predetermined data management area of the information recording/reproducing medium (2).

7. The method according to claim 6,
wherein the step of storing continues (S108) until the reproduction of all the information is completed (S106) prior to updating (S112) the data indicating reproduction order.

8. The method according to claim 6 or 7,
wherein after the reproduction of all the information is completed (S106), reproducing the information is stopped (S110) for updating the data so as to change the reproduction order.

9. The method according to any of claims 6 to 8,
wherein the updated data are UTOC data to be recorded in a read-in area of the information recording/reproducing medium (2).
